# FASCICULE DE BREVET EUROPEEN

(11) **EP 4 078 936 B1**
(45) Date de publication et mention de la délivrance du brevet: **19.02.2025**
(21) Numéro de dépôt: 20821012.0
(22) Date de dépôt: 11.12.2020
(51) Int. Cl.: H04M 1/725, G06F 13/40, H02J 7/00, H04M 1/72409

(54) **DISPOSITIF D'INTERCONNEXION DE DEUX TERMINAUX**
VORRICHTUNG ZUR VERBINDUNG ZWEIER ENDGERÄTE
DEVICE FOR INTERCONNECTING TWO TERMINALS

(30) Priorité: 20.12.2019 FR 1915338
(43) Date de publication de la demande: 26.10.2022
(73) Titulaire: Banks and Acquirers International Holding, 75015 Paris (FR)
(72) Inventeur: GOULON, Maxime, 26300 CHATUZANGE-LE-GOUBET (FR); PHILIBERT, Eric, 38160 SAINT-MARCELLIN (FR)
(74) Mandataire: LLR
(86) Numéro de dépôt international: PCT/EP2020/085839
(87) Numéro de publication internationale: WO 2021/122396

(56) Documents cités:
- EP-A1- 2 649 699
- EP-A1- 3 486 792
- CN-A- 106 655 346

## Description

### 1. Domaine Technique

L'invention se rapporte au domaine de l'interconnexion entre deux dispositifs électroniques. Plus particulièrement, l'invention se rapporte à l'interconnexion entre deux terminaux, dont au moins un des deux possède une interface standardisée (de type USB). Plus spécifiquement, l'invention concerne un dispositif d'interconnexion de terminaux autorisant une charge simultanée des deux terminaux connectés tout en laissant libre l'interface standardisée.

### 2. Art Antérieur

De par l'essor des terminaux de communication d'utilisateurs (de type tablette ou smartphone), il est courant que des professionnels fassent appel à des terminaux initialement destinés au grand public, pour effectuer certaines tâches de leur activité professionnelle. C'est notamment le cas des médecins, qui réalisent des visites à domiciles, ou encore des chauffeurs de taxis, des agents de sécurité, des marchands en situation de mobilité, etc. Ces professionnels disposent souvent d'un terminal dédié à leur activité, appelé terminal professionnel. Pour le médecin, un tel terminal professionnel peut prendre la forme d'un lecteur de carte d'assuré social (i.e. carte Vitale^{™} en France). Pour le chauffeur de taxi ou le marchand en situation de mobilité, un tel terminal professionnel peut prendre la forme d'un terminal de paiement. Pour l'agent de sécurité, un tel terminal peut prendre la forme d'une console de détection et/ou de surveillance. Ces terminaux professionnels présentent certaines caractéristiques qui sont adaptées aux services qu'ils rendent, comme par exemple une sécurité accrue, des processeurs de traitement dédiés et des applicatifs sécurisés. Ces terminaux professionnels, cependant, ne disposent pas nécessairement de capacités de traitement étendues et sont souvent cantonnés aux fonctions pour lesquels ils ont été programmée. C'est pour cette raison que les professionnels sont équipés de terminaux de communication généralistes qui embarquent des applications métier dédiées. Pour le médecin, il s'agit par exemple d'une tablette comprenant une ou plusieurs applications permettant d'éditer des feuilles de soins. Pour le chauffeur de taxi ou le marchand en situation de mobilité, il s'agit d'applications de prise de commande et/ou de rendez-vous ou encore d'application de géolocalisation, installées sur un smartphone. Cette situation peut également être présente lorsqu'aucune situation de mobilité n'est présente : de plus en plus de boutiques physiques sont équipées d'un terminal de paiement et d'une tablette, cette dernière comprenant une ou plusieurs applications de point de vente (POS en anglais).

Or, la numérisation croissante de l'activité des professionnels induit de plus en plus la nécessité de connecter, au moins de manière temporaire, le terminal professionnel et le terminal d'utilisateur afin que l'un et l'autre puissent effectuer des échanges d'informations pour mettre en œuvre de services numériques communs. Par exemple, pour le médecin, le lecteur de carte d'assuré social fourni à l'application d'édition de feuille de soin (du terminal d'utilisateur), les données nécessaires à l'établissement d'une feuille de soin électronique pouvant par exemple être transmise directement à l'organisme en charge de la gestion des assurés, ou l'application d'édition de feuille de soin fourni au lecteur de carte d'assuré social des données qui sont inscrites sur la carte de l'assuré. Dans le cas du vendeur en situation de mobilité, l'application de point de vente mobile fournit au terminal de paiement le montant des achats effectués par le client avant un paiement ; et le terminal de paiement fournit à l'application de point de vente mobile, des données de validation ou d'invalidation de la transaction menée à l'aide de la carte de paiement du client. Quelle que soit la situation, il est souvent nécessaire de connecter physiquement les deux terminaux entre eux afin qu'ils puissent disposer d'une interface d'échange de données. Notamment, les terminaux professionnels peuvent nécessiter des connexions plus ou moins constantes à des terminaux d'utilisateur afin de tirer profits de la capacité de ces derniers à fournir des services plus ou moins complexes, que les terminaux professionnels ne sont pas en mesure de rendre.

Pour ce faire, du côté du terminal d'utilisateur, l'utilisation du port USB (de type USB-C ou micro USB) ou d'un port lightning^{™} (spécifique aux dispositifs de la marque Apple^{™}) est la solution naturellement mise en œuvre. Du côté du terminal professionnel, en revanche, aucune solution spécifique n'est majoritairement retenue, même si l'utilisation d'un port USB est également de plus en plus répandue. Quoi qu'il en soit, en fonction de l'utilisation faite, des difficultés d'intégration voire des impossibilités d'intégration surviennent. Il est en effet difficile, et certaines fois impossible de relier physiquement les deux dispositifs. Par exemple, pour le port lightning^{™}, il est nécessaire de développer des briques applicatives spécifiques, uniquement pour pouvoir effectuer une communication bidirectionnelle, par l'intermédiaire de ce port, avec un terminal professionnel.

Malgré des difficultés d'intégration, voire des impossibilités d'intégration dans certains cas, le besoin de (re)lier à la fois un dispositif d'utilisateur (de type smartphone, tablette) avec un autre dispositif (par exemple un terminal professionnel, pouvant être un terminal de paiement, un terminal d'accès, un terminal de contrôle, etc.) est constant. Ce problème est souvent subdivisé en plusieurs problèmes individuels : la communication en tant que telle est réglée par la mise en œuvre de bibliothèques logicielles ; le problème de la connexion physique est solutionné en fabriquant un dispositif de connexion particulier de type câble USB-c/USB ou encore lightning^{™}/micro-USB ou encore USB/propriétaire lorsque le connecteur du terminal professionnel est propriétaire. Ces solutions de connexion physique, cependant, présentent au moins un problème : il réside dans la monopolisation des ports en question, à commencer par le port du dispositif d'utilisateur (mais également celui du terminal professionnel), qui par voie de conséquence, n'est pas disponible pour prendre en charge d'autres applications, notamment la charge de sa batterie.

Il existe des dispositifs qui sont en mesure de connecter deux terminaux entre eux, notamment pour des besoins de gestion de charge de batterie. Un tel dispositif est notamment présenté dans le document EP2649699. Plus particulièrement, il est proposé un dispositif permettant de réaliser l'appairage physique de deux terminaux, par exemple un terminal de paiement et un terminal de communication, ce dispositif étant apte à effectuer une gestion de la charge de ces deux terminaux (i.e. à effectuer une balance de chargement et de déchargement de la batterie de chaque terminal), et ce afin d'assurer que l'un des terminaux est en mesure de recharger l'autre autant que de besoin. En revanche, la solution décrite dans EP2649699 ne permet pas de recharger les terminaux de manière simultanée tout en permettant d'assurer une communication entre le terminal de communication et l'environnement extérieur (autre que le terminal professionnel) par le même port. En d'autres termes les solutions existantes ne permettent pas de conserver une disponibilité du port (par exemple du port lightning^{™} ou du port USB-c du terminal de communication, tout en assurant une charge des deux terminaux. Les solutions existantes monopolisent à la fois le port du terminal de communication et le port du terminal professionnel sans permettre la charge simultanée de ces deux dispositifs. Il est également fait référence aux documents sur l'état de la technique EP3486792A1 et CN106655346.

### 3. Résumé de l'invention

L'invention permet de répondre à ces problématiques de monopolisation de port et de charge de batterie non résolues par les techniques de l'art antérieur.

Plus particulièrement, l'invention se rapporte à un dispositif d'interconnexion d'un premier terminal avec un deuxième terminal, dispositif comprenant un premier connecteur mâle, destiné à être inséré dans un connecteur femelle correspondant du premier terminal et un deuxième connecteur mâle destiné à être inséré dans un connecteur femelle correspondant du deuxième terminal. Le premier connecteur mâle est un connecteur réversible comprenant au moins deux séries de pins [A] et [B] fonctionnellement identiques; Le dispositif comprend un connecteur femelle, au moins en partie connecté à la première série de pins [A] du premier connecteur mâle par un circuit de transfert et le deuxième connecteur mâle est au moins en partie connecté à la deuxième série de pins [B] du premier connecteur mâle par un circuit d'interconnexion ; et dans lequel le circuit de transfert et le circuit d'interconnexion sont au moins en partie sous le contrôle d'un sous-système électronique d'interconnexion qui comprend un switch de transfert de données et un dérivateur d'alimentation.

Ainsi, l'invention permet à la fois de connecter deux terminaux entre eux tout en laissant libre un port de connexion additionnel.

Selon un mode de réalisation particulier, le connecteur femelle est un connecteur réversible.

Ainsi, le dispositif offre la possibilité de continuer à tirer profit de la réversibilité du premier terminal de communication en reportant cette réversibilité sur le connecteur femelle du dispositif.

Selon une caractéristique particulière, le dispositif d'interconnexion comprend en outre un connecteur additionnel d'alimentation.

Ainsi, l'invention offre la possibilité de recharger tant le premier terminal que le deuxième terminal sans obstruer le port femelle.

Selon un mode de réalisation particulier, le circuit de transfert et le circuit d'interconnexion sont au moins en partie sous le contrôle d'un sous-système électronique d'interconnexion qui comprend un switch de transfert de données et un dérivateur d'alimentation.

Ainsi, l'invention permet de gérer automatiquement le basculement entre les modes d'utilisation.

Selon une caractéristique particulière, le dérivateur d'alimentation comprend une résistance de rappel [#1] connectée sur un pin spécifique du premier connecteur mâle. Ainsi, l'invention simule de manière astucieuse le passage en mode « maître » du premier terminal afin qu'il puisse fournir une alimentation électrique au deuxième terminal.

Selon un mode de réalisation particulier, le sous-système électronique d'interconnexion comprend en outre un temporisateur.

Ainsi, l'invention permet d'effectuer des transitions entre les différentes utilisations du dispositif d'interconnexion de manière plus douce et respectueuse des composants électroniques des terminaux.

Dans une autre configuration, l'invention se rapporte à un système de paiement comprenant :
un terminal de communication disposant d'un port femelle réversible ;
un terminal de paiement disposant d'un port femelle de type USB ;
Ce système comprend également un dispositif d'interconnexion tel que décrit précédemment.

### 4. Brève description des figures

D'autres caractéristiques et avantages apparaîtront plus clairement à la lecture de la description suivante d'un mode de réalisation préférentiel, donné à titre de simple exemple illustratif et non limitatif, et des dessins annexés, parmi lesquels :
- la figure 1 expose le principe général du dispositif d'interconnexion objet de la présente
- la figure 2 expose un exemple de connecteur réversible avec lequel un dispositif d'interconnexion de l'invention peut être construit ;
- la figure 3 illustre un schéma de principe du câblage d'interconnexion de données entre les connecteurs du dispositif d'interconnexion selon un mode de réalisation particulier ;
- la figure 4 illustre un schéma de principe du câblage d'alimentation électrique entre les connecteurs du dispositif d'interconnexion selon un mode de réalisation particulier.

### 5. Description détaillée

### 5.1. Rappel du principe général

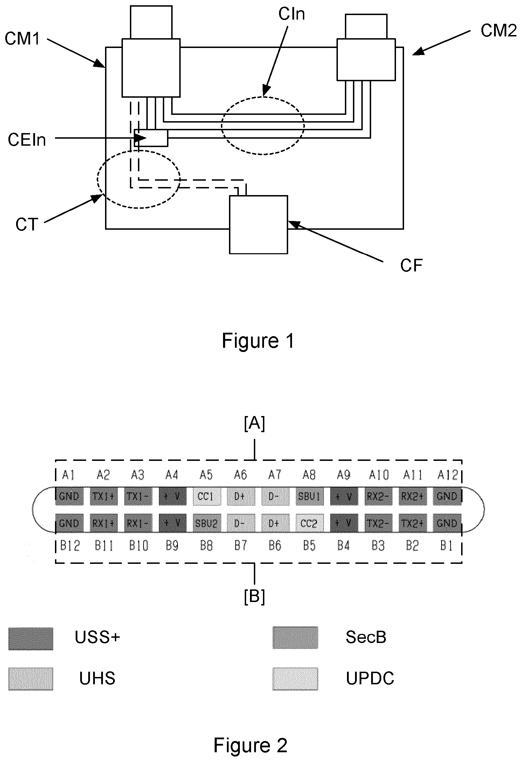

Comme précédemment mentionné, un objet de l'invention est de proposer un dispositif d'interconnexion de deux terminaux qui d'une part permette de gérer la charge d'au moins un des deux terminaux et d'autre part permette aux deux terminaux d'échanger des données, tout en laissant libre au moins un port standardisé réversible (par exemple le port USB_c ou lightning) de l'un de ces terminaux. Un tel dispositif d'interconnexion, décrit en relation avec la figure 1, comprend un premier connecteur réversible male (CM1) destiné à être inséré dans un connecteur réversible femelle d'un premier terminal et un deuxième connecteur male (CM2) destiné à être inséré dans un connecteur femelle d'un deuxième terminal.

Comme cela est explicité par la suite, les deux connecteurs males du dispositif d'interconnexion sont reliés entre eux par un circuit d'interconnexion (Cln) comprenant plusieurs pistes (seules quelques pistes sont représentées), au moins l'une de ces pistes étant gérée par un sous- système électronique d'interconnexion (CEIn). Le dispositif d'interconnexion comprend également un connecteur réversible femelle (CF), relié au moins au premier connecteur réversible male (CM1) par un circuit, appelé circuit de transfert (CT). Pour les besoins du schéma, seules quelques pistes sont représentées. Ce circuit de transfert (CT) comprend également plusieurs pistes reliant le connecteur réversible femelle au connecteur réversible male et au moins une de ces pistes est gérée par le sous- système électronique d'interconnexion (CEIn). Selon l'invention, un tel dispositif est en mesure de gérer à la fois l'échange de données entre les deux terminaux connectés au premier connecteur réversible male (CM1) et au deuxième connecteur mâle (CM2) et à la fois d'autres fonctions qui peuvent être fournies par le connecteur réversible femelle (CF). Pour se faire, on tire avantage du premier connecteur réversible mâle (CM1) qui est divisé en deux parties distinctes, tel que présenté en figure 2. En effet, le principe des connecteurs réversible est de dupliquer les pins pour la transmission des signaux au niveau des connecteurs, notamment des connecteurs femelles.

Selon l'invention, la partie [A] du premier connecteur réversible male (CM1) est destinée à être connectée avec le deuxième connecteur male (CM2) afin de pouvoir échanger des données, par l'intermédiaire du circuit d'interconnexion. Selon l'invention, la partie [B] du premier connecteur réversible male est destinée à être connectée avec le connecteur réversible femelle (CF) par l'intermédiaire du circuit de transfert (CT). Sur la figure 2, un connecteur réversible USB-C est illustré. Les pins de transmission de données, d'alimentation et de masse sont représentées. Le connecteur étant réversible, chaque pin de la partie [A] comprend un pin équivalent en partie [B] Par exemple, le pin AI correspond au pin BI, A2 au B2, etc. Ceci, au final, selon l'invention, permet de câbler de manière différente les pins de la partie [A] et les pins de la partie [B], au prix d'une modification de la caractéristique de réversibilité du connecteur réversible mâle CM1. Sur la figure 2, les niveaux de gris représentent des types de pin différents, chacun ayant une fonction particulière, dont USS+ représente les pins de communication « USB 3.1 Super Speed » (A2, A3, A10, Ail, B2, B3, B10, BII) à 10 Gbs, UHS représente les pins de communication « USB 2.0 High Speed »(A6, A7, B6, B7) à 480 Mbps, SECB représente le bus secondaire (A8, B8) et UPDC représente les pins de communication pour la fourniture de courant USB (A5, B5).

Ainsi, à partir d'une caractéristique particulière, propre aux connecteurs réversibles (c'est-à- dire le fait qu'un dispositif puisse y être inséré dans n'importe quel sens), les inventeurs ont détourné cette caractéristique pour attribuer deux fonctions distinctes à ce connecteur, sans altérer le fonctionnement des terminaux qui y sont connectés. Le dispositif d'interconnexion peut donc indistinctement gérer à la fois une connexion entre un premier terminal (par exemple un terminal de communication), connecté sur le premier connecteur réversible mâle et un deuxième terminal connecté sur le deuxième connecteur male (qui n'est pas nécessairement réversible) tandis qu'un autre dispositif (une clef USB, un chargeur), peut être connecté au connecteur réversible femelle CF. Comme cela est décrit ultérieurement, en lien avec un mode de réalisation, un circuit électronique particulier peut être mis en oeuvre pour permettre une interconnexion automatique des terminaux et des dispositifs qui sont branchés sur les différents connecteurs.

Dans l'exemple présenté en figure 2, afin de conserver le principe de réversibilité du connecteur femelle, les deux parties [A] et [B] du connecteur femelle sont reliées entre elles, soit : AI, B12, A12 et BI. A2 et B2. A3 et B3. A4, B9, A9 et B4. A5 et B5. A6 et B6. A7 et B7. A8 et B8. A10 et B10. et enfin Ail et BII. Ensuite, pour que les liaisons nécessaires aux transferts de données entre le premier terminal et le connecteur femelle CF se fassent en toute transparence, les signaux inutilisés sont reliés directement à l'une des parties du premier connecteur mâle CM (partie [B] par exemple). Soit : RX+, RX-, GND, V+, SBV, CC2, TX+ et TX-. Les liaisons réalisées entre les différents pins des connecteurs peuvent être faites indistinctement soit dans le connecteur femelle (CF), soit au niveau du câblage lui-même, soit au niveau d'un nœud d'interconnexion du dispositif d'interconnexion.

D'une manière générale, le dispositif d'interconnexion de l'invention peut se présenter sous la forme d'un câble en-Y comprenant les deux connecteurs mâles et le connecteur femelle. Dans cette configuration, les pistes (notamment d'alimentation, mais pas uniquement) des parties [A] et [B] du connecteur femelle réversible sont par exemple reliées aux pistes correspondantes de la partie [B] du premier connecteur male réversible. De cette manière, on conserve la caractéristique de réversibilité du connecteur femelle : le chargeur, qui fournit du courant aux pistes d'alimentation des parties [A] et [B] du connecteur femelle peut toujours être inséré dans n'importe quel sens. Les pistes de la partie [A] du premier connecteur réversible mâle sont quant à elles connectées à des pistes correspondantes du deuxième connecteur mâle, en fonction de la configuration et du type de ce deuxième connecteur mâle. De cette manière, lorsqu'un chargeur est branché sur le connecteur femelle et un premier terminal branché sur le premier connecteur mâle, le premier terminal est en mesure de recevoir une alimentation en provenance du chargeur. De même, lorsque d'autres dispositifs ayant d'autres fonctions sont branchés sur le connecteur réversible femelle (clé USB, dongle de sécurisation, caméra, etc.) ceux-ci fonctionnent correctement avec le premier terminal. De plus, lorsqu'un deuxième terminal est branché sur le deuxième connecteur, le deuxième terminal et le premier terminal peuvent échanger les données nécessaires à la mise en œuvre de leurs fonctions communes. De plus, le premier terminal est, si besoin en mesure de recharger le deuxième terminal en fournissant, à celui-ci le courant nécessaire par l'intermédiaire des pistes d'alimentation : le premier terminal est donc alternativement récepteur de courant en provenance du chargeur branché sur le connecteur femelle et fournisseur de courant, si besoin, à destination du deuxième terminal.

Le dispositif d'interconnexion de l'invention peut également être mis en œuvre dans un boîtier qui peut accepter à la fois un premier terminal, apte à se connecter sur le premier connecteur mâle réversible et un deuxième terminal apte à se connecteur sur le deuxième connecteur mâle. Les formes et les dimensions de ce boîtier sont alors adaptées aux fonctions à rendre tant par le premier terminal que par le deuxième terminal et le boîtier peut par exemple mettre ces deux terminaux dos à dos ou les aligner côte à côte. Le dispositif d'interconnexion de l'invention est alors situé à la base de ces deux terminaux et permet de les connecter.

### 5.2. Description d'un mode de réalisation

Dans ce mode de réalisation, on décrit une construction particulière du dispositif d'interconnexion selon l'invention. Plus particulièrement, dans ce mode de réalisation, le premier connecteur réversible mâle est un connecteur male de type USB-C, destiné à être connecté à un terminal de communication de type smartphone ou tablette ; le deuxième connecteur male est un connecteur USB (micro ou mini), destiné à être connecté à un terminal de paiement. Le connecteur femelle est également un connecteur USB-C, destiné à recevoir un chargeur USB-C ou encore une clé ou un dongle USB-C (par exemple un dongle de sécurisation de transaction) ou un dock, c'est-à-dire une base sur laquelle le dispositif d'interconnexion est branché. Grâce à la mise en oeuvre du principe précédemment décrit et d'un système électronique spécifique, le dispositif d'interconnexion de ce mode de réalisation permet de basculer automatiquement (sans opération manuelle de l'utilisateur) des signaux entre les terminaux lors de la connexion du terminal de communication avec le dispositif d'interconnexion pour gérer automatiquement la charge des deux parties du système lorsque le courant arrive sur le dispositif d'interconnexion, tout en maintenant le dialogue entre les deux terminaux. Le dispositif d'interconnexion gère le basculement automatique des signaux USB à l'insertion du terminal dans celui-ci, sans nouveaux développements matériel sur le terminal de paiement et sans logiciel spécifique, ni sur le terminal de communication, ni sur le terminal de paiement. Le dispositif d'interconnexion permet ainsi de lier des terminaux déjà sur le terrain.

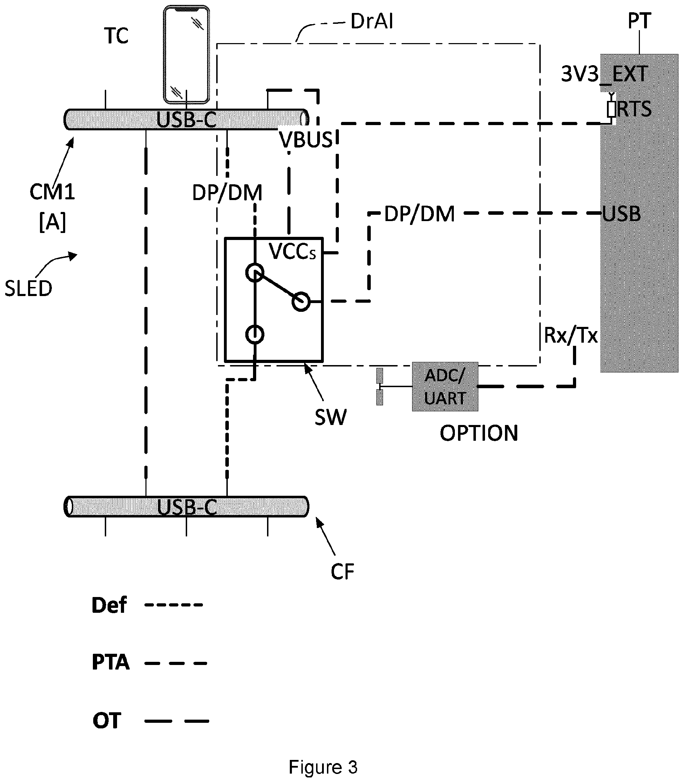

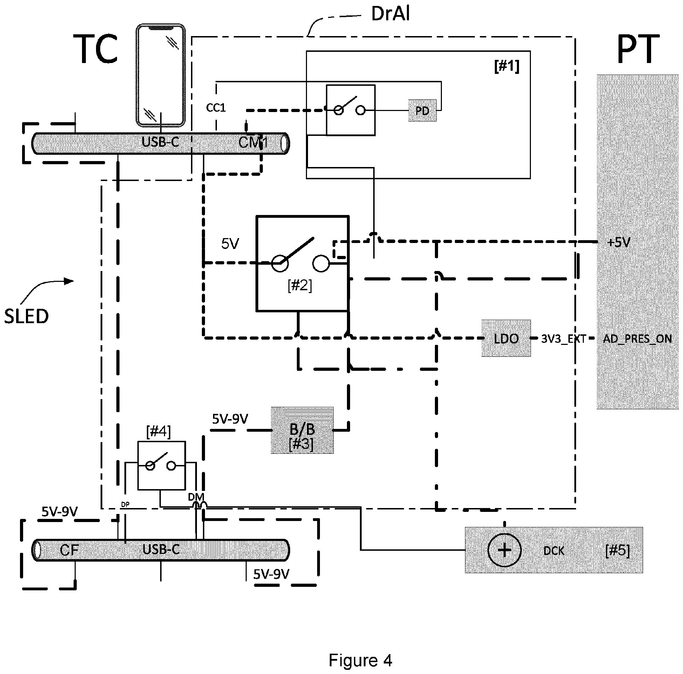

Dans ce mode de réalisation, comme dans le principe général, les inventeurs ont eu l'idée d'utiliser les signaux existants du terminal (par exemple le terminal de paiement) afin de pouvoir basculer le bus de données USB du connecteur USB-C du dispositif d'interconnexion vers le connecteur d'interface (également USB) du terminal de paiement. Le sous-système électronique d'interconnexion (CEIn) est présenté ci-après en relation avec les figures 3 et 4 et comprend à la fois une gestion du transfert de données et une gestion de l'alimentation.

Lorsque le terminal de paiement est connecté au dispositif d'interconnexion : l'USB-C (ou le Lightning) du terminal de communication est connecté au terminal de paiement. Lorsque le terminal de paiement est absent du dispositif d'interconnexion : l'USB-C du terminal de communication est connecté à l'USB-C (port femelle) du dispositif d'interconnexion.

Ainsi, grâce à l'invention, il est possible de basculer les signaux USB-C ou Lightning du terminal de communication vers le terminal de paiement lorsque ce dernier est inséré dans le dispositif d'interconnexion (appelé SLED). L'ensemble des signaux de l'USB-C du dispositif d'interconnexion (sauf USB_DP et USB_DN) sont déportés vers le connecteur du terminal de communication afin de conserver les options de charge basées sur l'état des pins CCI et CC2 dans le cadre du standard USB-C. Ceci afin de garder les options de charge fournit par les chargeurs nouvelles générations.

Les figures 3 et 4 exposent deux vues de la circuiterie mise en oeuvre pour permettre à la fois la gestion du chargement des terminaux et l'échange de données, sous la forme d'un sous-système électronique d'interconnexion (CEIn). La figure 3 décrit un schéma de principe de la commutation de signal (i.e. de signal se rapportant à des données à transférer) mise en oeuvre dans ce sous-système, pour commuter automatiquement les signaux USB du terminal de communication vers le terminal de paiement lors de l'insertion de celui-ci dans le dispositif d'interconnexion (SLED). Par défaut les signaux USB sont commutés vers l'USB-C femelle du dispositif d'interconnexion. Cette cinématique permet de gérer les différents modes de charges du smartphone car ils sont pilotés par le dialogue entre le dispositif d'interconnexion et le terminal de communication. En d'autres termes, comme exposé ici, le circuit de transfert et le circuit d'interconnexion sont au moins en partie sous le contrôle d'un sous- système électronique d'interconnexion (CEIn) qui comprend un switch de transfert de données (SW) et un dérivateur d'alimentation (DrAl). Il est ainsi possible de gérer automatiquement le basculement entre les modes d'utilisation du système d'interconnexion, et en particulier du premier connecteur mâle (mode maître, mode esclave, mode où il charge les autres terminaux/dispositifs, mode où il charge sa propre batterie, mode où il transmet des données). Ainsi, on fournit un système d'interconnexion de deux terminaux comprenant un port libre, qui est apte à recharger simultanément ces deux terminaux, tout en permettant de gérer de façon automatique le basculement entre les différents modes d'utilisation de ce système.

Plus particulièrement, pour cette implémentation, on utilise un signal UART de contrôle de flux (non utilisé dans la majorité des cas) afin de commuter un switch (SW). Ce signal n'est disponible que lorsque le terminal de communication est présent : VBUS fourni et convertit en 3V3 sur A_D_PRESENT ON. La présence du terminal de communication polarise la liaison UART coté terminal de paiement et génère un signal 3V3 sur le pin RTS. Lorsque ce pin RTS est polarisé, les signaux USB commutent automatiquement vers le terminal de paiement. Le retrait du terminal de paiement entraîne le basculement du signal RTS à l'état bas et le switch USB rebascule alors vers l'USB-C femelle du dispositif d'interconnexion - qui reçoit la charge ou des données.

La figure 3 décrit plus particulièrement la gestion de l'échange de données entre le terminal de communication (TC) et le terminal de paiement (PT). En utilisation par défaut (Def), le switch (SW) connecte directement le connecteur USB-C femelle (CF) à la partie [A] du connecteur USB-C mâle (CM1). Les signaux non impactés par la transmission de données (OT) ne passent pas le switch et sont transmis en direct entre les connecteurs femelle (CF) et mâle (CM1). Ces connexions faites, lorsque l'utilisateur souhaite connecter un câble de données (ou autre dispositif clé USB, dongle de sécurité) sur le connecteur femelle CF pour dialoguer avec le terminal de communication TC, celui-ci le reconnaît automatiquement (comme si le dispositif d'interconnexion n'existait pas). Le mode « transparent » est effectif via la partie [A] du premier connecteur mâle CM1.

Lorsque le terminal de paiement en connecté, comme explicité précédemment, l'UART est polarisé et les signaux USB commutent vers le terminal de paiement. La partie [B] du connecteur USB- C mâle est alors utilisée pour échanger des données entre le terminal de communication et le terminal de paiement. Plus particulièrement, lorsque le terminal de paiement (PT) est relié au dispositif d'interconnexion, le switch (SW) est automatiquement activé via l'utilisation d'une des pattes de PT (RTS). La communication se fait alors entre le terminal de communication (TC) et le terminal de paiement (PT) via les pins D+ et D- des deux connecteurs mâle (CM1 et CM2).

Dans un mode de réalisation, lorsque l'utilisateur souhaite établir une communication via un câble de données sur le connecteur femelle (CF) (en pointillé court sur la figure3), il effectue un retrait du terminal de paiement (PT) pour que SW soit désactivé. Dans un autre mode de réalisation, plutôt que d'effectuer un retrait physique du terminal de paiement, l'utilisation d'un bouton prévu à cet effet sur le dispositif d'interconnexion peut engendrer, par l'intermédiaire d'un circuit électronique, une simulation de retrait (par exemple pendant un temps déterminé). Alternativement, plutôt que de devoir actionner un bouton ou d'effectuer le retrait du terminal de paiement, une technique consiste à affecter une fonction de retrait logiciel au terminal de communication, par exemple par l'installation d'un composant logiciel et/ou d'une application prévue à cet effet. De cette manière, un signal est transmis, depuis le terminal de communication (TC), au switch (SW) afin que celui-ci reprenne sa configuration initiale de transmission de données.

La figure 4 décrit plus particulièrement la gestion de l'énergie au niveau du dispositif d'interconnexion, mise en oeuvre dans ce sous-système. Plusieurs cas de figure sont envisagés et sont décrits ici. Ils sont gérés par le dérivateur d'alimentation (DrAl), qui comprend un ou plusieurs des mécanismes et système de gestion de l'alimentation présentés ci-après ([#1], [#3], [#4], figure 4) en fonction des conditions de mise en oeuvre opérationnelles.

### Cas 1 : absence de source d'alimentation extérieure :

Le dispositif d'interconnexion ne possédant, en tant que tel, aucune source d'alimentation, il est intéressant que le terminal de communication (TC) puisse fournir suffisamment de courant pour faire fonctionner le dispositif d'interconnexion d'une part et le terminal de paiement d'autre part (si nécessaire, par exemple en fonction du niveau de charge de la batterie du terminal de paiement). En utilisant astucieusement les fonctionnalités du format USB-C, on passe le terminal de communication (TC) en mode maître. Dans ce mode, le terminal de communication fournit du courant au dispositif qui est attaché à son port (dot le dispositif d'interconnexion, mais également à une clé USB ou encore au terminal de paiement attaché au dispositif d'interconnexion). Pour se faire, nous simulons la présence d'un accessoire via le système [#1], figure 4, sur le pin CCI (A, fig 2), en introduisant une résistance. Le terminal de communication (TC) fournit alors les 5V nécessaires (pointillés courts) à l'alimentation du dispositif d'interconnexion d'une part et à celle du terminal de paiement d'autre part. Lorsque le système [#1] est activé (i.e. on passe en « Pull Down » (PD)), le courant est délivré à partir du terminal de communication (TC). Dans ce mode de réalisation, le système [#1] est une résistance de rappel (« pull-down resistor » en anglais). D'autres systèmes ayant la même fonction pourraient être utilisés.

Dans ce mode de réalisation, le pin CC2 (B5, figure 2) peut être relié directement sur les pattes CC1/CC2 du connecteur femelle (CF) transposant alors cette fonctionnalité (i.e. fourniture d'alimentation) pour un accessoire extérieur (type dongle ou clé USB), branché sur le connecteur femelle (CF).

Cas 2 : présence de source d'alimentation extérieure sur le connecteur femelle (CF) du dispositif d'interconnexion.

Quelle que soit la source d'alimentation appliquée sur le connecteur femelle (CF), il est préférable, notamment pour tirer avantage de cette source d'alimentation, que le terminal de communication (TC) la détecte et arrête de fournir du courant.

Pour se faire, l'application de cette source d'alimentation (5V-9V en pointillés larges) désactive automatiquement le système [#1] pour que le terminal de communication (TC) voit (perçoive) une source externe et bascule en mode « Esclave », permettant ainsi de charger sa propre batterie. Le dispositif d'interconnexion commute également [Cln] pour que l'alimentation ne provienne plus que de l'extérieur (pistes en pointillés large) via le convertisseur [#3] (B/B de l'anglais pour BUCK/BOOST) abaissant la tension à 5V si nécessaire pour le terminal de paiement (PT). Bien entendu, ce convertisseur [#3] n'est présente que dans le cas ou des tensions supérieures à 5V sont envisagées).

Il existe de multiples sources permettant d'alimenter et de charger le terminal de communication (TC). Pour que celui-ci reconnaisse et distingue les sources qui sont connectées au connecteur femelle (CF), il suffit, selon l'invention, de relier les pistes nécessaires à cette détection entre le connecteur femelle (CF) et le premier connecteur même (CM1), en n'utilisant, comme explicité précédemment, qu'une seule partie du connecteur (CM1). Ainsi, le terminal de paiement est en mesure d'adapter son comportement de charge à la source d'alimentation connectée sur les premier connecteur mâle (CM1) : par exemple le terminal de communication peut indifféremment continuer à gérer un chargeur de nouvelle génération (9V) et/ou un chargeur traditionnel (5V).

### Cas 3 : présence de source d'alimentation extérieure un connecteur additionnel (DCK)[#5]

Dans un mode de réalisation complémentaire, un connecteur additionnel d'alimentation (dédié à cette fonction) peut être prévu sur le dispositif d'interconnexion. L'objectif est d'utiliser ce connecteur additionnel pour à la fois alimenter le système composé du dispositif d'interconnexion, du terminal de communication et du terminal de paiement. Lorsqu'une alimentation est présente sur le connecteur (DCK), le principe mis en oeuvre est le même que sur le connecteur femelle (CF).

Une alimentation directe (5V) est fournie au terminal de paiement (pointillé point-long). Une alimentation (5V) est également fournie au connecteur femelle (CF) (non représentée pour plus de clarté), par câblage dédiée du connecteur additionnel (DCK) vers les pistes correspondantes du connecteur femelle (CF).

De plus, deux mécanismes sont mis en oeuvre pour le connecteur femelle (CF) : d'une part un détrompage mécanique est utilisé pour empêcher l'utilisation du connecteur femelle (CF) lorsque le système est posé sur une base de rechargement (non représentée). D'autre part, pour que le terminal de communication (TC) reconnaisse un chargeur standard les pins DP (D+, A6, B6, fig. 2) et DM (D-, A7, B7, fig. 2) du connecteur femelle (CF) sont reliées entre elles. Une simulation de court-circuit sur ces pins est effectuée à l'aide du mécanisme [#4] activé lorsque le connecteur additionnel (DCK) est branché sur une alimentation.

5.3. Autres caractéristiques et avantages Le dispositif d'interconnexion peut être mis en oeuvre de manière simple et peu coûteuse, comme cela est décrit dans les modes de réalisation et variantes précédemment présentées. Bien entendu, il ne s'agit pas de la seule manière de réaliser ce type de dispositif et d'autres mécanismes que ceux décrits pourraient être substitués.

Dans le cas général d'utilisation du dispositif d'interconnexion, plusieurs scénarios de connexions et de déconnexions successives de terminaux peuvent intervenir. Un point important est que selon l'invention, à l'aide du dispositif d'interconnexion, le terminal de communication (TC) joue alternativement un rôle de chargeur (en mode « maître ») et de récepteur de courant (chargé, en mode « esclave »). Cette alternance de rôle est obtenue par la détection ou non d'une alimentation et/ou d'un terminal de paiement connecté au dispositif d'interconnexion. Pour permettre cette alternance dans des conditions favorables à un maintien en conditions opérationnelle du terminal de communication, il peut être souhaitable que l'alternance des rôles ne se fasse pas de manière trop brutale. Certains terminaux de communication peuvent avoir des composants électroniques plus fragiles que d'autres et le dispositif d'interconnexion peut prendre en compte cette situation afin de rendre ces transitions acceptables. Pour ce faire, les inventeurs ont eu l'idée d'intégrer, au sein du dispositif d'interconnexion, un temporisateur. Celui-ci prend entrée tout ou partie de la circuiterie de transmission de données et tout ou partie de la circuiterie de la gestion de l'alimentation, comme exposé précédemment. Lorsqu'un changement d'état est détecté par le temporisateur (i.e. connexion déconnexion de dispositif), le temporisateur initie un compteur temporel (par exemple compris entre 1 et 3 secondes) qui permet une transition plus conforme aux attentes du terminal de communication. Le compteur temporel (timer) est activé entre la déconnexion d'un premier dispositif et la connexion d'un deuxième dispositif. Ainsi, le terminal de communication dispose du temps nécessaire pour absorber la déconnexion (absorption tant logicielle que matérielle, permettant de faire une déconnexion « propre ») avant que la connexion du deuxième dispositif soit instanciée (permettant de réaliser une connexion également « propre » avec un délai suffisant).

## Revendications

1. Dispositif d'interconnexion d'un premier terminal avec un deuxième terminal, dispositif comprenant un premier connecteur mâle (CM1), conformé pour être inséré dans un connecteur femelle correspondant du premier terminal et un deuxième connecteur mâle (CM2) conformé pour être inséré dans un connecteur femelle correspondant du deuxième terminal, dispositif dans lequel le premier connecteur mâle (CM1) est un connecteur réversible comprenant au moins deux séries de pins [A] et [B] fonctionnellement identiques et caractérisé en que le dispositif comprend un connecteur femelle (CF), au moins en partie connecté à la première série de pins [A] du premier connecteur mâle (CM1) par un circuit de transfert (CT) et en ce que le deuxième connecteur mâle (CM2) est au moins en partie connecté à la deuxième série de pins [B] du premier connecteur mâle (CM1) par un circuit d'interconnexion (Cln) ; et dans lequel le circuit de transfert et le circuit d'interconnexion sont au moins en partie sous le contrôle d'un sous-système électronique d'interconnexion (CEIn) qui comprend un switch de transfert de données (SW) et un dérivateur d'alimentation (DrAl).

2. Dispositif d'interconnexion selon la revendication 1, **caractérisé en ce que** le connecteur femelle (CF) est un connecteur réversible.

3. Dispositif d'interconnexion selon la revendication 1, **caractérisé en ce qu'**il comprend en outre un connecteur additionnel d'alimentation (DCK).

4. Dispositif d'interconnexion selon la revendication 1, **caractérisé en ce que** le dérivateur d'alimentation (DrAl) comprend une résistance de rappel [#1] connectée sur un pin spécifique du premier connecteur mâle.

5. Dispositif d'interconnexion selon la revendication 3, **caractérisé en ce que** le sous-système électronique d'interconnexion (CEIn) comprend en outre un temporisateur.

6. Système de paiement comprenant :
- un terminal de communication disposant d'un port femelle réversible ;
- un terminal de paiement disposant d'un port femelle de type USB ;
**caractérisé en ce qu'**il comprend un dispositif d'interconnexion selon l'une quelconque des revendications précédentes.

## Patentansprüche

1. Vorrichtung zur Verbindung eines ersten Endgeräts mit einem zweiten Endgerät, wobei die Vorrichtung einen ersten Steckverbinder (CM1), der dafür ausgebildet ist, in einen entsprechenden Buchsenverbinder des ersten Endgeräts eingeführt zu werden, und einen zweiten Steckverbinder (CM2), der dafür ausgebildet ist, in einen entsprechenden Buchsenverbinder des zweiten Endgeräts eingeführt zu werden, umfasst, wobei der erste Steckverbinder (CM1) ein reversibler Verbinder ist, der wenigstens zwei Pin-Reihen [A] und [B] umfasst, die funktional identisch sind, **dadurch gekennzeichnet, dass** die Vorrichtung einen Buchsenverbinder (CF) umfasst, der wenigstens zum Teil an die erste Pin-Reihe [A] des ersten Steckverbinders (CM1) über eine Übertragungsschaltung (CT) angeschlossen ist, und dass der zweite Steckverbinder (CM2) wenigstens teilweise an die zweite Pin-Reihe [B] des ersten Steckverbinders (CM1) über eine Verbindungsschaltung (CIn) angeschlossen ist; und wobei die Übertragungsschaltung und die Verbindungsschaltung wenigstens zum Teil unter der Kontrolle einer elektronischen Verbindungsbaugruppe (CEIn) stehen, die einen Datenübertragungsschalter (SW) und eine Bypass-Versorgungseinrichtung (DrAl) umfasst.

2. Verbindungsvorrichtung nach Anspruch 1, **dadurch gekennzeichnet, dass** der Buchsenverbinder (CF) ein reversibler Verbinder ist.

3. Verbindungsvorrichtung nach Anspruch 1, **dadurch gekennzeichnet, dass** sie ferner einen zusätzlichen Versorgungsverbinder (DCK) umfasst.

4. Verbindungsvorrichtung nach Anspruch 1, **dadurch gekennzeichnet, dass** die Bypass-Versorgungseinrichtung (DrAl) einen Pull-Down-Widerstand [#1] umfasst, der an einem spezifischen Pin des ersten Steckverbinders angeschlossen ist.

5. Verbindungsvorrichtung nach Anspruch 3, **dadurch gekennzeichnet, dass** die elektronische Verbindungsbaugruppe (CEIn) ferner einen Timer umfasst.

6. Zahlungssystem, umfassend:
- ein Kommunikationsendgerät, das über einen reversiblen Buchsenanschluss verfügt;
- ein Zahlungsendgerät, das über einen Buchsenanschluss vom USB-Typ verfügt;
**dadurch gekennzeichnet, dass** es eine Verbindungsvorrichtung nach einem der vorstehenden Ansprüche, umfasst.

## Claims

1. A device for interconnecting a first terminal with a second terminal, the device comprising a first male connector (CM1) shaped to be inserted in a corresponding female connector of the first terminal and a second male connector (CM2) shaped to be inserted in a corresponding female connector of the second terminal, a device in which the first male connector (CM1) is a reversible connector comprising at least two series of functionally identical pins [A] and [B] and **characterised in that** the device comprises a female connector (CF), at least partly connected to the first series of pins [A] of the first male connector (CM1) by a transfer circuit (CT) and **in that** the second male connector (CM2) is at least partly connected to the second series of pins [B] of the first male connector (CM1) by an interconnection circuit (Cln); and wherein the transfer circuit and the interconnection circuit are at least in part under the control of an electronic interconnection subsystem (CEIn) which comprises a data transfer switch (SW) and a power supply bypass (DrAl).

2. An interconnection device as claimed in claim 1, **characterised in that** the female connector (CF) is a reversible connector.

3. An interconnection device as claimed in claim 1, **characterised in that** it further comprises an additional power connector (DCK).

4. Interconnection device according to claim 1, **characterized in that** the power supply bypass (DrAl) comprises a pull-up resistor [#1] connected to a specific pin of the first male connector.

5. The interconnection device of claim 3, **characterised in that** the electronic interconnection subsystem (CEIn) further comprises a timer.

6. Payment system comprising: a communication terminal having a reversible female port; a payment terminal having a USB-type female port; ***characterized* in that** it comprises an interconnection device according to any one of the preceding claims.
